(19) **Europäisches Patentamt**
**European Patent Office**
**Office européen des brevets**

(11) **EP 4 000 011 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **20740607.5**

(22) Anmeldetag: **14.07.2020**

(51) Internationale Patentklassifikation (IPC):
**G06N 3/042** *(2023.01)* **G06N 3/08** *(2023.01)*
**G06N 3/045** *(2023.01)* **G06N 5/01** *(2023.01)*
**G06N 7/01** *(2023.01)*

(52) Gemeinsame Patentklassifikation (CPC):
**G06N 3/042; G06N 5/01;** G06N 3/045; G06N 3/08;
G06N 7/01

(86) Internationale Anmeldenummer:
**PCT/EP2020/069843**

(87) Internationale Veröffentlichungsnummer:
**WO 2021/009153 (21.01.2021 Gazette 2021/03)**

(54) **KOMPONENTENBASIERTE VERARBEITUNG VON EINGANGSGRÖSSEN**

COMPONENT-BASED PROCESSING OF INPUT VARIABLES

TRAITEMENT DE GRANDEURS D'ENTRÉE FONDÉ SUR DES COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2019 DE 102019119087**

(43) Veröffentlichungstag der Anmeldung:
**25.05.2022 Patentblatt 2022/21**

(73) Patentinhaber: **VOLKSWAGEN AKTIENGESELLSCHAFT**
**38440 Wolfsburg (DE)**

(72) Erfinder:
• **SARALAJEW, Sascha**
**75446 Wiernsheim (DE)**
• **SCHLICHT, Peter**
**38442 Wolfsburg (DE)**
• **HOLDIJK, Lars**
**72072 Tübingen (DE)**
• **REES, Maike**
**76137 Karlsruhe (DE)**

(74) Vertreter: **Schmidt-Uhlig, Thomas**
**Rittner & Partner**
**Patentanwälte mbB**
**Schiffgraben 17**
**30159 Hannover (DE)**

(56) Entgegenhaltungen:
**US-A1- 2016 055 409 US-A1- 2017 372 071**

• **HSU SHIH-CHUNG ET AL: "Human Object Identification for Human-Robot Interaction by Using Fast R-CNN", 2018 SECOND IEEE INTERNATIONAL CONFERENCE ON ROBOTIC COMPUTING (IRC), IEEE, 31 January 2018 (2018-01-31), pages 201 - 204, XP033344127, [retrieved on 20180402], DOI: 10.1109/ IRC.2018.00043**

**EP 4 000 011 B1**

**Beschreibung**

Die vorliegende Erfindung betrifft ein Verfahren, ein Computerprogramm mit Instruktionen und ein Steuergerät zum Verarbeiten von Eingangsgrößen im Rahmen einer Wahrnehmungsaufgabe oder einer Planungsaufgabe in einem Fortbewegungsmittel, sowie ein Fortbewegungsmittel, das ein solches Verfahren oder ein solches Steuergerät nutzt.

Maschinelles Lernen hat großes Potential für moderne Fahrerassistenzsysteme und automatisiertes Fahren. Auf tiefen neuronalen Netzen basierende Funktionen verarbeiten Sensorrohdaten, die z.B. Kamera-, Radar- oder Lidardaten, um daraus relevante Informationen abzuleiten. Dies sind z.B. Art und Position von Objekten im Fahrzeugumfeld, deren Verhalten, oder Fahrbahngeometrien und -topologien. Unter den tiefen neuronalen Netzen haben sich insbesondere Faltungsnetze (CNN: Convolutional Neural Networks) als besonders geeignet für die Bildverarbeitung hervorgetan.

Ein wesentliches Merkmal bei der Entwicklung von tiefen neuronalen Netzen, dem sogenannten Training, liegt im rein datengetriebenen Parameterfitting ohne Experteneingriff. Dabei wird die Abweichung des Outputs für eine gegebene Parametrierung eines neuronalen Netzes von einer Grundwahrheit gemessen, der sogenannten "Ground Truth". Diese Abweichung wird auch als "Loss" bezeichnet. Die dabei verwendete Loss-Funktion wird in einer Weise gewählt, dass die Parameter differenzierbar von ihr abhängen. Im Rahmen des Gradientenabstiegs werden in jedem Trainingsschritt die Parameter des Netzes in Abhängigkeit der Ableitung der Abweichung angepasst. Die Abweichung wird dabei auf mehreren Beispielen ermittelt. Diese Trainingsschritte werden sehr oft wiederholt, bis sich der Loss nicht mehr verringert.

Bei diesem Vorgehen werden die Modellparameter ohne eine Experteneinschätzung oder eine semantisch motivierte Modellierung ermittelt. Dies hat wesentliche Folgen für die Eigenschaften des neuronalen Netzes.

Zum einen sind tiefe neuronale Netze für den Menschen weitgehend intransparent und ihre Berechnungen nicht interpretierbar. Dies stellt eine massive Einschränkung für ein systematisches Testen oder eine formale Verifikation dar. Auch ein konzeptionelles Fortentwickeln von neuronalen Netzen unter Hinzunahme neuer Konzepte oder existierenden Weltwissens wird hierdurch technisch quasi verhindert.

Des Weiteren sind tiefe neuronale Netze anfällig für schädliche Störeinflüsse, sogenannte "Adversarial Perturbations". Kleine, für den Menschen kaum wahrnehmbare oder die Situationseinschätzung nicht verändernde Manipulationen an den Eingangsdaten können zu komplett anderen Ausgangsdaten führen. Solche Manipulationen können sowohl mutwillig herbeigeführte Veränderungen der Daten sein, das sogenannte "Neural Hacking", als auch zufällig auftretende Bildveränderungen aufgrund von Sensorrauschen, Witterungseinflüssen, bestimmten Farben oder Kontrasten.

Schließlich ist es unklar, auf welche Eingangsmerkmale ein Algorithmus sensibilisiert. Dies sorgt dafür, dass synthetische Daten bisher kaum erfolgreich für das Training von neuronalen Netzen verwendet werden können. In Simulation oder auf anderweitig synthetische Daten trainierte neuronale Netze weisen eine erstaunlich schwache Performanz auf reale Sensordaten auf. Auch eine Ausführung von neuronalen Netzen in einer anderen Domäne, z.B. aufgrund eines Trainings im Sommer und einer Ausführung im Winter, reduziert die funktionale Güte teilweise dramatisch. Dies hat u.a. zur Folge, dass die in sich sehr attraktiv klingende Möglichkeit der Entwicklung und Freigabe von neuronalen Netzen in Simulation nicht realistisch scheint. Diese hätte den Vorteil, dass das teure Labeln der Daten und aufwendige Realtests entfallen könnten.

Insbesondere die Anfälligkeit für schädliche Störeinflüsse hat unklare Bedeutung für eventuelle Einschränkungen potenter neuronaler Netze in Hinblick auf die funktionale Sicherheit. Um letztere zu steigern, werden stets neue Defensivmaßnahmen vorgeschlagen, die neuronale Netze robuster gegen die Existenz von adversarialen Störungen machen sollen. Die Messung von Robustheit sowie viele Maßnahmen zur Steigerung der Robustheit greifen auf modernste Algorithmen zur Erzeugung von "Angriffen" auf neuronale Netze zurück. Letztere entstehen derzeit in hoher Frequenz und in immer stärkerer Ausprägung, ohne aber einer gemeinsamen Struktur zu folgen, die ein systematisches Verteidigen erlauben würde.

Eine Reihe von Ansätzen befassen sich mit den oben angeführten Problemen. Unter dem Begriff "hybrides Lernen" wurden bereits in den 90er Jahren Methoden der Integration von Wissen erforscht. Diese Ansätze skalieren allerdings nur schlecht oder gar nicht auf die hochkomplexen modernen neuronalen Netze. Außerdem werden Methoden der Regelintegration im Modell, den Daten oder dem Training durch die schiere Menge des Trainings überlagert.

Stand der Technik in der Robustifizierung von neuronalen Netzen gegen adversariale Störungen ist das sogenannte adversariale Training, bei dem dem neuronalen Netz möglichst "schädliche" Trainingsbeispiele gezeigt werden, um das Netz zu härten. Adversariales Training steigert die Blackbox-Eigenschaften von neuronalen Netzen. Außerdem ist es extrem rechenintensiv und erlaubt es nicht, das neuronale Netz auf neue Konzepte zu erweitern.

Eine existierende Verteidigung gegen adversariale Angriffe besteht in der Vorverarbeitung von Daten, z.B. einer Rauschentfernung. Allerdings ist das Entwickeln von Angriffen gegen Vereidigungstechnologien wie Datenvorverarbeitung oder "Gradient Masking" Fokus aktueller wissenschaftlicher Arbeiten. Der Erfolg dieser Angriffe zeigt die Schwäche solcher Verteidigungsmaßnahmen. Zudem wird der Blackbox-Charakter neuronaler Netze durch Datenvorverarbeitung oder Gradient Masking nicht abgebaut.

Konzepte des Zero-Shot- und One-Shot-Lernens beschreiben Mechanismen zum schnellen Erlernen neuartiger Konzepte. Diese Konzepte sind im Allgemeinen derzeit technologisch nicht ausgereift. Auch eine Untersuchung der Robustheit der entstehenden Modelle steht weitestgehend aus.

Es gibt Ansätze zudem, um mittels Kompression von Daten und Netzen eine Steigerung der Netzrobustheit zu erzielen. Derartige Kompressionsmethoden vermindern allerdings im Allgemeinen die Verständlichkeit der neuronalen Netze.

Ansätze von sogenannter "Organic AI" versuchen durch die Definition festgelegter Bildmerkmale und die Detektion dieser im Bild eine stärkere Verständlichkeit und indirekt eine gesteigerte Robustheit zu erlangen. Bisher sind mittels der beschriebenen Technologie allerdings keine relevanten Funktionen in ausreichender Qualität umgesetzt worden.

Schließlich gibt es zahlreiche auf Heatmapping basierende Methoden, die auf eine Erklärbarkeit von neuronalen Netzen vermöge von Aktivierungskarten auf die Eingangsdaten zu schließen. Hierbei werden Netzsensitivitäten rückwärts durch das Netz in den Eingangsraum propagiert um prototypische Eingangsmerkmale abzuleiten. Eine Reihe wissenschaftlicher Arbeiten attestiert allerdings eine geringe Aussagekraft von Heatmaps.

Vor diesem Hintergrund beschreibt DE 10 2019 105 850 A1 ein Verfahren zur Erzeugung eines reduzierten neuronalen Netzes für ein Steuergerät eines Fahrzeugs. Bei dem Verfahren wird ein erstes Datenfeld eines ersten neuronalen Netzes eingelesen. Das erste Datenfeld weist Einträge auf, die in ihrer Gesamtheit zumindest teilweise eine interne Logik des ersten neuronalen Netzes repräsentieren. Mit Hilfe des ersten Datenfeldes wird dann ein reduziertes neuronales Netz erzeugt. Das reduzierte neuronale Netz weist ein reduziertes Datenfeld mit Einträgen auf, die in ihrer Gesamtheit zumindest teilweise eine interne Logik des reduzierten neuronalen Netzes repräsentieren. Das reduzierte Datenfeld hat weniger von Null verschiedene Einträge als das erste Datenfeld.

Der Artikel von O. Li et al.: "Deep Learning for Case-Based Reasoning through Prototypes: A Neural Network that Explains Its Predictions" [1], beschreibt eine Netzwerkarchitektur für Deep Learning, die auf natürliche Weise ihre eigene Argumentation für jede Vorhersage erklärt. Die Architektur umfasst einen Autoencoder und eine spezielle Prototypschicht, wobei jede Einheit dieser Schicht einen Gewichtsvektor speichert, der einem kodierten Trainingseingang ähnelt. Der Encoder des Autoencoders ermöglicht es, Vergleiche im Latenzraum durchzuführen, während der Decoder es ermöglicht, die erlernten Prototypen zu visualisieren. Das Trainingsziel hat vier Terme: einen Genauigkeitsterm, einen Term, der jeden Prototyp ermutigt, mindestens einer kodierten Eingabe ähnlich zu sein, einen Term, der jede kodierte Eingabe ermutigt, mindestens einem Prototyp nahe zu kommen, und einen Term, der eine getreue Rekonstruktion durch den Autoencoder fördert. Die in der Prototypenschicht berechneten Abstände werden als Teil des Klassifizierungsprozesses verwendet.

Der Artikel von S. Saralajew et al.: "Prototype-based Neural Network Layers: Incorporating Vector Quantization" [2] beschreibt einen Ansatz zur Kombination von neuronalen Netzen und prototypenbasierten Vektorquantisierungsmethoden. Bei dem Ansatz wird eine lernende Vektorquantisierung als finales Klassifizierungsnetzwerk eines neuronalen Netzes genutzt, aufgeteilt in Merkmalsextraktion und Klassifizierung. Während des Trainings des neuronalen Netzes werden die Prototypen parallel zu den Merkmalsextraktionsschichten trainiert, wobei die Ausgabe der Merkmalsextraktionsschicht als Input für das prototypenbasierte Modell verwendet wird. Bei der Schlussfolgerung wird der Abstand zwischen der Ausgabe der Merkmalsextraktionsschicht und allen erlernten Prototypen zur Klassifizierung herangezogen.

Der Artikel von J. Snell et al.: "Prototypical Networks for Few-shot Learning" [3] beschreibt ein prototypisches Netzwerk für das Lernen auf Basis weniger Beispiele. Das Netzwerk basiert auf der Idee, dass jede Klasse mit Hilfe ihrer Beispiele in einem von einem neuronalen Netz erlernten Darstellungsraum dargestellt werden kann. Durch episodisches Training wird das Netzwerk so trainiert, dass es bei Verfügbarkeit nur weniger Beispiele gute Leistungen erbringt. Durch sorgfältige Wahl der gewählten Entfernungsmetrik und durch eine Anpassung des episodischen Trainings kann die Leistung weiter gesteigert werden.

Der Artikel von P. Tokmakov et al.: "Learning Compositional Representations for Few-Shot Recognition" [4] beschreibt ein Verfahren zum maschinellem Lernen, das eine Methode zur Regularisierung nutzt. Diese ermöglicht es, die erlernte Darstellung in Teile zu zerlegen. Die Methode verwendet Attribut-Annotationen auf Kategorieebene, um den Merkmalsraum eines Netzwerks zu trennen in Teilbereiche, die den Attributen entsprechen. Diese Attribute können sowohl rein visuell sein, wie Objektteile, als auch abstrakter Natur sein, wie Offenheit oder Symmetrie.

US 2016/0055409 A1 beschreibt ein Verfahren zum Klassifizieren eines Objekts. Bei dem Verfahren werden mehrere Konfidenzwerte auf mehrere Objekte angewandt. Zudem wird eine Metrik basierend auf den mehreren Konfidenzwerten bestimmt. Wenn die Metrik über einem Schwellenwert liegt, wird eine Klassifizierung eines ersten Objekts aus den mehreren Objekten basierend auf einem Wissensgraphen bestimmt.

Der Artikel von S.C. Hsu et al.: "Human Object Identification for Human-Robot Interaction by using Fast R-CNN" [5] beschreibt eine Personenerkennung mit Hilfe eines vereinfachten schnellen regionenbasierten Faltungsnetzwerks. Die Personenerkennung nutz Körperteil-Detektoren, die Kopf und Schulter, Rumpf und Beine erkennen.

Es ist eine Aufgabe der Erfindung, ein verbessertes Konzept für die Verwendung neuronaler Netze zur Verarbeitung von Eingangsgrößen aufzuzeigen, das skalierfähig und sich selbst erklärend ist.

Diese Aufgabe wird durch ein Verfahren mit den Merkmalen des Anspruchs 1, durch ein Computerprogramm mit Instruktionen gemäß Anspruch 5, durch ein Steuergerät mit den Merkmalen des Anspruchs 6 sowie durch ein Fortbewegungsmittel gemäß Anspruch 7 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten von Eingangsgrößen im Rahmen einer Wahrnehmungsaufgabe oder einer Planungsaufgabe in einem Fortbewegungsmittel die Schritte:

- Empfangen einer zu verarbeitenden Eingangsgröße;
- Ableiten einer Merkmalsverteilung aus der Eingangsgröße durch ein neuronales Netz, wobei das neuronale Netz mit Komponenten, die in Bezug auf eine Anwendung des neuronalen Netzes typische Eingangsgrößen repräsentieren, und Merkmalsverteilungen der Komponenten als Basis für Klassenentscheidungen trainiert ist, wobei die Komponenten in Form von Primitiven gegeben sind, die elementare Bestandteile repräsentieren, aus denen sich die typischen Eingangsgrößen ergeben, und wobei die Merkmalsverteilungen angeben, welche Komponenten für eine Klassenhypothese detektiert werden müssen, welche Komponenten für die Klassenhypothese nicht detektiert werden dürfen und welche Komponenten nicht zur Klassenhypothese beitragen;
- Ermitteln von Detektionswahrscheinlichkeiten der Merkmalsverteilung in Bezug auf die Merkmalsverteilungen der beim Trainieren des neuronalen Netzes verwendeten Komponenten;
- Schlussfolgern einer Ausgabe für die Eingangsgröße auf Basis der ermittelten Detektionswahrscheinlichkeiten, wobei beim Schlussfolgern der Ausgabe positives, negatives und indefinites Schlussfolgern genutzt wird; und
- Verwenden der Ausgabe durch ein Steuerungssystem des Fortbewegungsmittels als Grundlage für Entscheidungen des Steuerungssystems, wobei die Entscheidungen des Steuerungssystems die Wahrnehmungsaufgabe oder die Planungsaufgabe in dem Fortbewegungsmittel betreffen.

Gemäß einem weiteren Aspekt der Erfindung umfasst ein Computerprogramm Instruktionen, die bei Ausführung durch einen Computer den Computer zur Ausführung der folgenden Schritte zum Verarbeiten von Eingangsgrößen im Rahmen einer Wahrnehmungsaufgabe oder einer Planungsaufgabe in einem Fortbewegungsmittel veranlassen:

- Empfangen einer zu verarbeitenden Eingangsgröße;
- Ableiten einer Merkmalsverteilung aus der Eingangsgröße durch ein neuronales Netz, wobei das neuronale Netz mit Komponenten, die in Bezug auf eine Anwendung des neuronalen Netzes typische Eingangsgrößen repräsentieren, und Merkmalsverteilungen der Komponenten als Basis für Klassenentscheidungen trainiert ist, wobei die Komponenten in Form von Primitiven gegeben sind, die elementare Bestandteile repräsentieren, aus denen sich die typischen Eingangsgrößen ergeben, und wobei die Merkmalsverteilungen angeben, welche Komponenten für eine Klassenhypothese detektiert werden müssen, welche Komponenten für die Klassenhypothese nicht detektiert werden dürfen und welche Komponenten nicht zur Klassenhypothese beitragen;
- Ermitteln von Detektionswahrscheinlichkeiten der Merkmalsverteilung in Bezug auf die Merkmalsverteilungen der beim Trainieren des neuronalen Netzes verwendeten Komponenten;
- Schlussfolgern einer Ausgabe für die Eingangsgröße auf Basis der ermittelten Detektionswahrscheinlichkeiten, wobei beim Schlussfolgern der Ausgabe positives, negatives und indefinites Schlussfolgern genutzt wird; und
- Verwenden der Ausgabe durch ein Steuerungssystem des Fortbewegungsmittels als Grundlage für Entscheidungen des Steuerungssystems, wobei die Entscheidungen des Steuerungssystems die Wahrnehmungsaufgabe oder die Planungsaufgabe in dem Fortbewegungsmittel betreffen.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist ein Steuergerät zum Verarbeiten von Eingangsgrößen im Rahmen einer Wahrnehmungsaufgabe oder einer Planungsaufgabe in einem Fortbewegungsmittel auf:

- einen Eingang zum Empfangen einer zu verarbeitenden Eingangsgröße;
- ein neuronales Netz, das mit Komponenten, die in Bezug auf eine Anwendung des neuronalen Netzes typische Eingangsgrößen repräsentieren, und Merkmalsverteilungen der Komponenten als Basis für Klassenentscheidungen trainiert ist, wobei die Komponenten in Form von Primitiven gegeben sind, die elementare Bestandteile repräsentieren, aus denen sich die typischen Eingangsgrößen ergeben, und wobei die Merkmalsverteilungen angeben, welche Komponenten für eine Klassenhypothese detektiert werden müssen, welche Komponenten für die Klassenhypothese nicht detektiert werden dürfen und welche Komponenten nicht zur Klassenhypothese beitragen, wobei das neuronale Netz eingerichtet ist, eine Merkmalsverteilung aus der Eingangsgröße abzuleiten und Detektionswahrscheinlichkeiten der Merkmalsverteilung in Bezug auf die Merkmalsverteilungen der beim Trainieren des neuronalen Netzes verwendeten Komponenten zu ermitteln;

- ein Schlussfolgerungsmodul zum Schlussfolgern einer Ausgabe für die Eingangsgröße auf Basis der ermittelten Detektionswahrscheinlichkeiten , wobei das Schlussfolgerungsmodul eingerichtet ist, beim Schlussfolgern der Ausgabe positives, negatives und indefinites Schlussfolgern zu nutzen; und

- einen Ausgang zum Ausgeben der Ausgabe an ein Steuerungssystem des Fortbewegungsmittels als Grundlage für Entscheidungen des Steuerungssystems, wobei die Entscheidungen des Steuerungssystems die Wahrnehmungsaufgabe oder die Planungsaufgabe in dem Fortbewegungsmittel betreffen.

Grundlage der erfindungsgemäßen Lösung ist das expertenbasierte Auswählen von Komponenten als Basis einer differenzierbaren neuronalen Netzwerkstruktur. Die Komponenten repräsentieren dabei in Bezug auf eine Anwendung des neuronalen Netzes typische Eingangsgrößen. Zudem werden Merkmalsverteilungen der Komponenten als Basis für Klassenentscheidungen bereitgestellt. Mit den Komponenten und den Merkmalsverteilungen wird ein neuronales Netz trainiert. Die Merkmalsverteilungen geben dabei an, welche Komponenten für eine Klassenhypothese detektiert werden müssen, welche Komponenten für die Klassenhypothese nicht detektiert werden dürfen und welche Komponenten nicht zur Klassenhypothese beitragen. Die Komponenten sind in Form von Primitiven gegeben, die elementare Bestandteile repräsentieren, aus denen sich die typischen Eingangsgrößen ergeben. Bei diesem Ansatz werden elementare Bestandteile genutzt, aus denen sich typische und von Experten als relevant eingestufte Sensoreindrücke ergeben. Solche Primitive können Komponenten sein, z.B. Bauteile, Körperteile, Fahrmanöverprimitive etc., oder sensorielle Minimaleindrücke, wie Kantenzüge, Reflexionsmuster, Texturen etc. Dies führt dazu, dass ein Situationsverständnis relativ zu von Experten definierten Situationen aufgebaut wird. Damit verbunden ist eine Erklärbarkeit des gelernten Prozesses der Entscheidungsfindung und infolgedessen auch eine Absicherbarkeit. Ein weiterer Vorteil besteht darin, dass das Modell aus Daten trainiert wird, also ein gradientenbasiertes Lernparadigma verwendet wird. Zudem ist das neuronale Netz durch die Verwendung weiterer Komponenten um neue Konzepte erweiterbar. Während des Entwicklungsprozesses können die Komponenten bei Bedarf in einem gewissen Maß selbst variabel gehalten werden, um zu verstehen, welche Komponenten das neuronale Netz sieht.

Ein zentraler Ansatz der erfindungsgemäßen Lösung beim Verarbeiten von Eingangsgrößen besteht darin, dass Detektionswahrscheinlichkeiten einer Merkmalsverteilung der Eingangsgröße zu den Merkmalsverteilungen der beim Training genutzten Komponenten berechnet werden. Basierend auf diesen Detektionswahrscheinlichkeiten wird dann eine Modellausgabe generiert. Aufgrund des stabilisierenden Effektes diskriminativer Merkmalsverteilungen, relativ zu denen die aktuelle Eingangsgröße bewertet wird, ergibt sich eine gesteigerte Robustheit der Lösung in Hinblick auf adversariale Störungen. Des Weiteren ist der beschriebene Ansatz nicht wesentlich berechnungsintensiver als herkömmliche neuronale Netze bei gleichwertiger funktionaler Güte und klar gesteigerter Erklär- und damit auch Absicherbarkeit. Zudem ist der Ansatz probabilistisch rigide formuliert und statistisch fundiert.

Erfindungsgemäß wird beim Schlussfolgern der Ausgabe positives, negatives und indefinites Schlussfolgern genutzt. Dazu wird vorzugsweise zumindest eine Schlussfolgerungsmatrix genutzt. Beim positiven Schlussfolgern muss eine Komponente detektiert werden, um die Hypothese einer bestimmten Klasse zu stützen. Beim negativen Schlussfolgern darf eine Komponente nicht detektiert werden, um die Hypothese einer Klasse zu stützen. Beim indefiniten Schlussfolgern trägt eine Komponente nicht zur Hypothese einer Klasse bei, d.h. die Komponente ist optional.

Gemäß einem Aspekt der Erfindung werden die Merkmalsverteilungen der beim Trainieren des neuronalen Netzes verwendeten Komponenten vorberechnet bereitgehalten. Die Merkmalsverteilungen für die Komponenten können z.B. im Entwicklungsprozess vorberechnet werden, da sie sich zum Zeitpunkt der Modellausführung im Feld nicht verändern. Im Feld wird dann lediglich die zur gegebenen Eingangsgröße zugehörige Merkmalsverteilung abgeleitet, was den erforderlichen Rechenaufwand verringert.

Gemäß einem Aspekt der Erfindung repräsentieren die Komponenten typische Objekte, Situationen oder Atmosphären. Beispielsweise kann es sich bei den Objekten um Verkehrsteilnehmer, Spurmarkierungen etc. handeln. Beispiele für Situationen sind Verkehrsszenarien oder Konstellationen von Objekten. Atmosphären können beispielsweise Witterungsverhältnisse, Belichtungsverhältnisse etc. sein. Die Verwendung derartiger Komponenten sorgt für eine besonders gute Erklärbarkeit des neuronalen Netzes.

Gemäß einem Aspekt der Erfindung werden die Komponenten in Form von Sensoreindrücken bereitgestellt. Vorzugsweise stehen die Komponenten dem verwendeten Algorithmus zu Beginn des Entwicklungsprozesses in Form von Sensoreindrücken zur Verfügung. Dabei kann es sich um echte Sensoreindrücke oder simulierte Sensoreindrücke handeln. Dies sorgt dafür, dass das neuronale Netz optimal auf die im realen Einsatz zu erwartenden Eingangsgrößen trainiert wird.

Besonders vorteilhaft wird ein erfindungsgemäßes Verfahren oder ein erfindungsgemäßes Steuergerät in einem Fortbewegungsmittel mit einem Steuerungssystem eingesetzt, insbesondere in einem autonomen oder teilautonomen Kraftfahrzeug oder einem autonomen oder teilautonomen Luftfahrzeug. Das Verarbeiten von Eingangsgrößen kann dabei sowohl im Rahmen einer Wahrnehmungsaufgabe oder als auch im Rahmen einer Planungsaufgabe erfolgen. Wahrnehmungsaufgaben fallen beispielsweise bei der Innenraumüberwachung oder in einer Reihe von Assistenzsystemen an. Planungsaufgaben können z.B. die Steuerung betreffen, u.a. in Hinblick auf Regelung, Motorsteuerung, Dynamik oder Batteriestörungen.

Eine Nutzung der erfindungsgemäßen Lösung kann daneben, gemäß nicht beanspruchten Ausführungsbeispielen, auch in den Bereichen Robotik oder Gesundheitsversorgung erfolgen.

Weitere Merkmale der vorliegenden Erfindung werden aus der nachfolgenden Beschreibung und den angehängten Ansprüchen in Verbindung mit den Figuren ersichtlich.

Fig. 1 zeigt schematisch ein Verfahren zum Trainieren eines neuronalen Netzes;

Fig. 2 zeigt eine erste Ausführungsform einer Vorrichtung zum Trainieren eines neuronalen Netzes;

Fig. 3 zeigt eine zweite Ausführungsform einer Vorrichtung zum Trainieren eines neuronalen Netzes;

Fig. 4 zeigt schematisch ein Verfahren zum Verarbeiten von Eingangsgrößen;

Fig. 5 zeigt eine erste Ausführungsform einer Vorrichtung zum Verarbeiten von Eingangsgrößen;

Fig. 6 zeigt eine zweite Ausführungsform einer Vorrichtung zum Verarbeiten von Eingangsgrößen;

Fig. 7 stellt schematisch ein Kraftfahrzeug dar, in dem eine erfindungsgemäße Lösung realisiert ist;

Fig. 8 illustriert die Erkennung einer Ziffer anhand einer Zerlegung der Ziffer in Komponenten;

Fig. 9 zeigt beispielhaft zwei Objektklassen nebst Komponenten und Bedingungen für das Schlussfolgern;

Fig. 10 zeigt beispielhaft Klassen-Zerlegungspläne und Gewichtungen für die zwei Klassen aus Fig. 9;

Fig. 11 illustriert das Ermitteln von Merkmalswerten durch einen Merkmalsextraktor;

Fig. 12 zeigt exemplarisch einen Entscheidungsbaum für das Schlussfolgern für eine Klasse; und

Fig. 13 zeigt beispielhaft einen gesamten Ablauf der Bestimmung eines Wahrscheinlichkeitsvektors für Klassenhypothesen.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

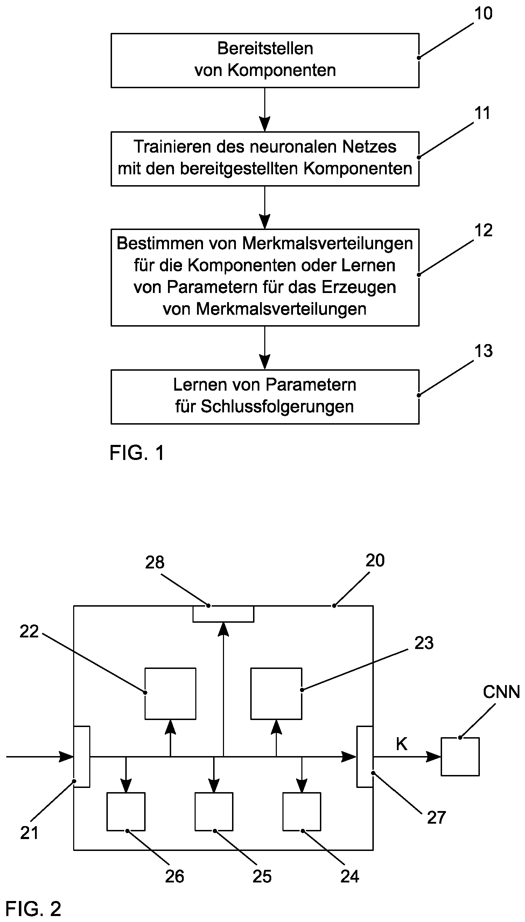

Fig. 1 zeigt schematisch ein Verfahren zum Trainieren eines neuronalen Netzes. In einem ersten Schritt 10 werden Komponenten bereitgestellt, die in Bezug auf eine Anwendung des neuronalen Netzes typische Eingangsgrößen repräsentieren. Das neuronale Netz wird dann zumindest mit den bereitgestellten Komponenten trainiert 11. Zusätzlich können Merkmalsverteilungen für die Komponenten bestimmt oder Parameter für das Erzeugen von Merkmalsverteilungen gelernt werden 12. Zudem können im Rahmen des Entwicklungsprozesses Parameter für Schlussfolgerungen datengetrieben gelernt werden 13. Die Komponenten können typische Objekte, Situationen oder Atmosphären repräsentieren und in Form von simulierten oder realen Sensoreindrücken bereitgestellt werden. Die Komponenten können zudem in Form von Primitiven gegeben sein, die elementare Bestandteile repräsentieren, aus denen sich die typischen Eingangsgrößen ergeben.

Fig. 2 zeigt eine vereinfachte schematische Darstellung einer ersten Ausführungsform einer Vorrichtung 20 zum Trainieren eines neuronalen Netzes CNN. Die Vorrichtung 20 hat einen Eingang 21, über den beispielsweise Simulationsparameter für eine Erzeugung von Komponenten oder reale Sensoreindrücke empfangen werden können. Ein Auswahlmodul 22 dient zum Bereitstellen von Komponenten K, die in Bezug auf eine Anwendung des neuronalen Netzes typische Eingangsgrößen repräsentieren. Die Vorrichtung 20 hat zudem ein Trainingsmodul 23, das das neuronale Netz CNN zumindest mit den bereitgestellten Komponenten K trainiert. Dazu kann das Trainingsmodul 23 die Komponenten K über einen Ausgang 27 der Vorrichtung 20 an das neuronale Netz CNN ausgeben. Zusätzlich kann ein Analysemodul 24 Merkmalsverteilungen für die Komponenten bestimmen oder Parameter für das Erzeugen von Merkmalsverteilungen lernen. Des Weiteren kann das Analysemodul 24 im Rahmen des Entwicklungsprozesses Parameter für Schlussfolgerungen datengetrieben lernen. Die Komponenten K können typische Objekte, Situationen oder Atmosphären repräsentieren und in Form von simulierten oder realen Sensoreindrücken bereitgestellt werden. Die Komponenten K können zudem in Form von Primitiven gegeben sein, die elementare Bestandteile repräsentieren, aus denen sich die typischen Eingangsgrößen ergeben.

Das Auswahlmodul 22, das Trainingsmodul 23 und das Analysemodul 24 können von einer Kontrolleinheit 25 gesteuert werden. Über eine Benutzerschnittstelle 28 können gegebenenfalls Einstellungen des Auswahlmoduls 22, des Trainingsmoduls 23, des Analysemoduls 24 oder der Kontrolleinheit 25 geändert werden. Die in der Vorrichtung 20 anfallenden Daten können bei Bedarf in einem Speicher 26 abgelegt werden, beispielsweise für eine spätere Auswertung oder für eine Nutzung durch die Komponenten der Vorrichtung 20. Das Auswahlmodul 22, das Trainingsmodul 23, das Analysemodul 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

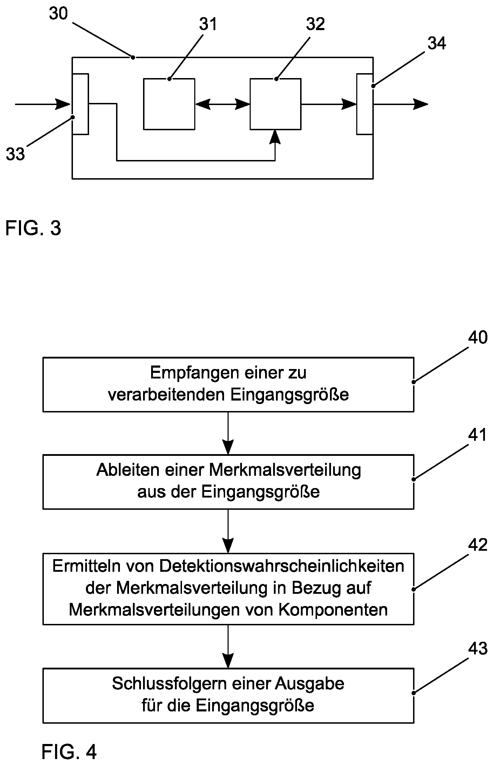

Fig. 3 zeigt eine vereinfachte schematische Darstellung einer zweiten Ausführungsform einer Vorrichtung 30 zum Trainieren eines neuronalen Netzes. Die Vorrichtung 30 weist einen Prozessor 32 und einen Speicher 31 auf. Beispielsweise handelt es sich bei der Vorrichtung 30 um einen Computer oder eine Workstation. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Verfahren zum Verarbeiten von Eingangsgrößen. In einem ersten Schritt 40 wird eine zu verarbeitende Eingangsgröße Empfangen. Aus der Eingangsgröße wird durch ein erfindungsgemäßes neuronales Netz eine Merkmalsverteilung abgeleitet 41. Zudem werden Detektionswahrscheinlichkeiten der Merkmalsverteilung in Bezug auf Merkmalsverteilungen von beim Trainieren des neuronalen Netzes verwendeten Komponenten ermittelt 42. Die Merkmalsverteilungen der beim Trainieren des neuronalen Netzes verwendeten Komponenten können dabei vorberechnet bereitgehalten werden. Auf Basis der ermittelten Detektionswahrscheinlichkeiten wird schließlich eine Ausgabe für die Eingangsgröße schlussgefolgert 43. Vorzugsweise wird beim Schlussfolgern 43 der Ausgabe positives und negatives Schlussfolgern genutzt. Dazu kann beispielsweise zumindest eine Schlussfolgerungsmatrix genutzt werden.

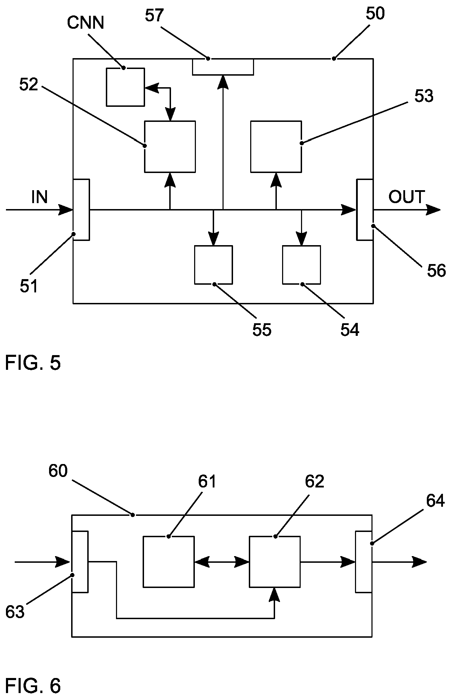

Fig. 5 zeigt eine vereinfachte schematische Darstellung einer ersten Ausführungsform eines Steuergeräts 50 zum Verarbeiten von Eingangsgrößen IN. Das Steuergerät 50 hat einen Eingang 51, über den eine zu verarbeitende Eingangsgröße IN empfangen werden kann. Ein Merkmalsverteilungsgenerator 52 leitet eine Merkmalsverteilung aus der Eingangsgröße IN ab. Dazu nutzt der Merkmalsverteilungsgenerator 52 ein erfindungsgemäßes neuronales Netz CNN. Das neuronale Netz CNN dient zudem zum Ermitteln von Detektionswahrscheinlichkeiten der Merkmalsverteilung in Bezug auf Merkmalsverteilungen von beim Trainieren des neuronalen Netzes CNN verwendeten Komponenten. Die Merkmalsverteilungen der beim Trainieren des neuronalen Netzes verwendeten Komponenten können dabei vorberechnet bereitgehalten werden. Das Steuergerät 50 hat des Weiteren ein Schlussfolgerungsmodul 53 zum Schlussfolgern einer Ausgabe OUT für die Eingangsgröße IN auf Basis der ermittelten Detektionswahrscheinlichkeiten.

Erfindungsgemäß nutzt das Schlussfolgerungsmodul 53 positives, negatives und indefinites Schlussfolgern. Dazu kann beispielsweise zumindest eine Schlussfolgerungsmatrix genutzt werden. Die Ausgabe OUT kann über einen Ausgang 56 des Steuergeräts 50 für eine weitere Nutzung ausgegeben werden.

Der Merkmalsverteilungsgenerator 52 und das Schlussfolgerungsmodul 53 können von einer Kontrolleinheit 54 gesteuert werden. Über eine Benutzerschnittstelle 57 können gegebenenfalls Einstellungen des Merkmalsverteilungsgenerators 52, des Schlussfolgerungsmoduls 53 oder der Kontrolleinheit 54 geändert werden. Die im Steuergerät 50 anfallenden Daten können bei Bedarf in einem Speicher 55 abgelegt werden, beispielsweise für eine spätere Auswertung oder für eine Nutzung durch die Komponenten des Steuergeräts 50. Der Merkmalsverteilungsgenerator 52, das Schlussfolgerungsmodul 53 sowie die Kontrolleinheit 54 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 51 und der Ausgang 56 können als getrennte Schnittstellen oder als eine kombinierte bidirektionale Schnittstelle implementiert sein.

Fig. 6 zeigt eine vereinfachte schematische Darstellung einer zweiten Ausführungsform einer Vorrichtung 60 zum Verarbeiten von Eingangsgrößen. Die Vorrichtung 60 weist einen Prozessor 62 und einen Speicher 61 auf. Beispielsweise handelt es sich bei der Vorrichtung 60 um einen Computer oder ein Steuergerät. Im Speicher 61 sind Instruktionen abgelegt, die die Vorrichtung 60 bei Ausführung durch den Prozessor 62 veranlassen, die Schritte gemäß einem der beschriebenen Verfahren auszuführen. Die im Speicher 61 abgelegten Instruktionen verkörpern somit ein durch den Prozessor 62 ausführbares Programm, welches das erfindungsgemäße Verfahren realisiert. Die Vorrichtung 60 hat einen Eingang 63 zum Empfangen von Informationen. Vom Prozessor 62 generierte Daten werden über einen Ausgang 64 bereitgestellt. Darüber hinaus können sie im Speicher 61 abgelegt werden. Der Eingang 63 und der Ausgang 64 können zu einer bidirektionalen Schnittstelle zusammengefasst sein.

Der Prozessor 62 kann eine oder mehrere Prozessoreinheiten umfassen, beispielsweise Mikroprozessoren, digitale Signalprozessoren oder Kombinationen daraus.

Die Speicher 55, 61 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

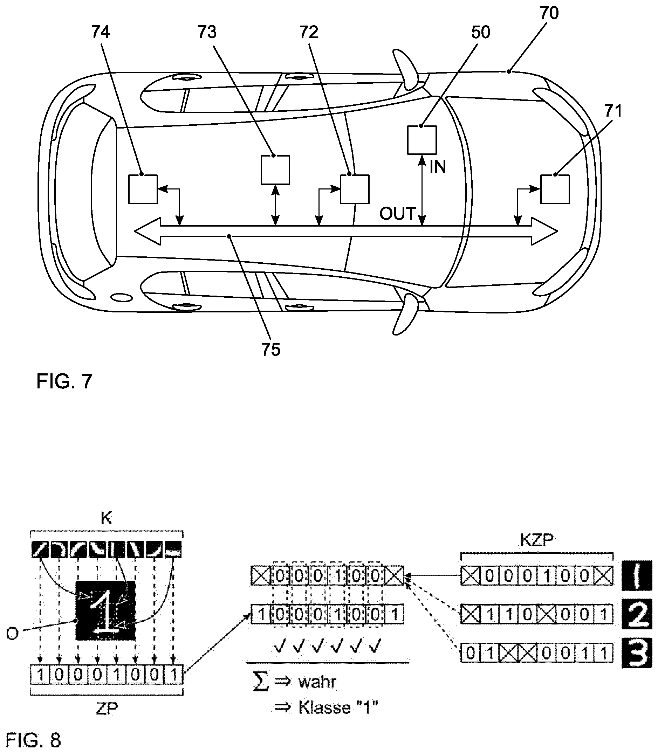

Fig. 7 stellt schematisch ein Kraftfahrzeug 70 als Beispiel für ein Fortbewegungsmittel dar, in dem eine erfindungsgemäße Lösung realisiert ist. Das Kraftfahrzeug 70 weist ein Steuerungssystem 71 für den automatisierten oder hochautomatisierten Fahrbetrieb auf. Ein erfindungsgemäßes Steuergerät 50 empfängt Eingangsgrößen IN, z.B. Betriebsparameter des Kraftfahrzeugs 70 oder Umgebungsdaten von einer im Kraftfahrzeug 70 verbauten Umfeldsensorik 72, und bestimmt Ausgaben OUT zu diesen Eingangsgrößen IN. Die Ausgaben OUT dienen als Grundlage für Entscheidungen des Steuerungssystems 71. In Fig. 7 ist das Steuergerät 50 eine eigenständige Komponente, es kann aber auch im Steuerungssystem 71 integriert sein. Eine weitere Komponente des Kraftfahrzeugs 70 ist eine Datenübertragungseinheit 73, über die u.a. eine Verbindung zu einem Backend aufgebaut werden kann, z.B. um aktualisierte Software für das Steuergerät 50 zu beziehen. Zur Speicherung von Daten ist ein Speicher 74 vorhanden. Der Datenaustausch zwischen den verschiedenen Komponenten des Kraftfahrzeugs 70 erfolgt über ein Netzwerk 75.

Nachfolgend sollen weitere Details des erfindungsgemäßen Ansatzes anhand der Figuren 8 bis 13 beschrieben werden.

Der erfindungsgemäße Ansatz ist angelehnt an Biedermans Theorie der Erkennung anhand von Komponenten [6]. Grob gesagt beschreibt diese Theorie, wie Menschen komplexe Objekte erkennen. Dazu wird angenommen, dass Objekte O in generische Elemente zerlegt werden können, die als strukturelle Primitiven dienen, sogenannte Komponenten K. Objekte O werden dann klassifiziert, indem der für das Objekt O extrahierte Zerlegungsplan ZP mit einem Klassen-Zerlegungsplan KZP für jede potentielle Objektklasse verglichen wird. Im Prinzip geben die Klassen-Zerlegungspläne KZP an, welche Komponenten K für die Zugehörigkeit zu einer gegebene Klasse detektiert werden müssen und welche Komponenten K nicht detektiert werden dürfen. Als einfaches Beispiel illustriert Fig. 8 die Erkennung einer Ziffer anhand einer Zerlegung der Ziffer in Komponenten K. In diesem Beispiel ist die Detektion einer Komponente K, die einen vertikalen Strich repräsentiert, ein Anhaltspunkt für das Vorliegen der Klasse "1". Anders ausgedrückt, hinsichtlich der einen vertikalen Strich repräsentierenden Komponente K wird für die Klasse "1" positiv schlussgefolgert, was in der Figur durch den Eintrag "1" im Klassen-Zerlegungsplan KZP zum Ausdruck gebracht wird. Entsprechend wird für alle Komponenten K, die gekrümmte Elemente repräsentieren, für die Klasse "1" negativ schlussgefolgert, was durch den Eintrag "0" im Klassen-Zerlegungsplan KZP vermittelt wird. Diese beiden Möglichkeiten werden nun durch eine dritte Möglichkeit ergänzt, bei der indefinit schlussgefolgert wird. Wie in Fig. 8 zu erkennen ist, sind nicht alle Komponenten K für die Erkennung der Ziffer "1" von Bedeutung. Beispielsweise wird für den horizontalen unteren Strich und den Schrägstrich weder positiv noch negativ schlussgefolgert, da sie nicht bei jedem Schreibstil genutzt werden. Das Auftreten dieser Komponenten ist daher optional. Dies wird durch den Eintrag "$\times$" im Klassen-Zerlegungsplan KZP zum Ausdruck gebracht. Die hier eingeführten Zerlegungspläne entsprechen den weiter oben angeführten Merkmalsverteilungen.

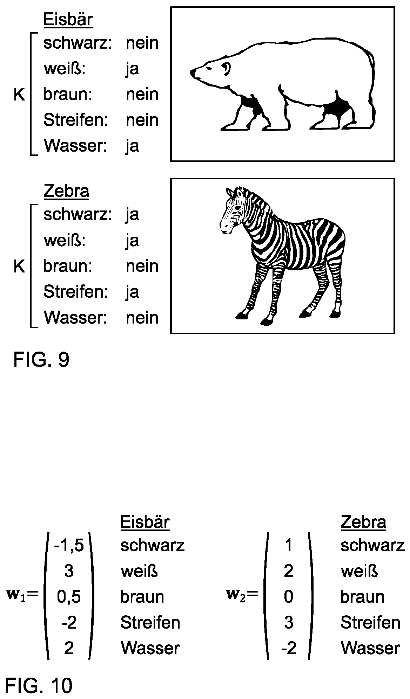

Am Beispiel der Erkennung von Eisbären und Zebras soll nun zunächst erläutert werden, wie neuronale Netze eine Entscheidung für eine Klasse modellieren. Beispielbilder für die Klasse "Eisbär" und die Klasse "Zebra" sowie zugehörige Komponenten und Bedingungen für das Schlussfolgern sind in Fig. 9 dargestellt.

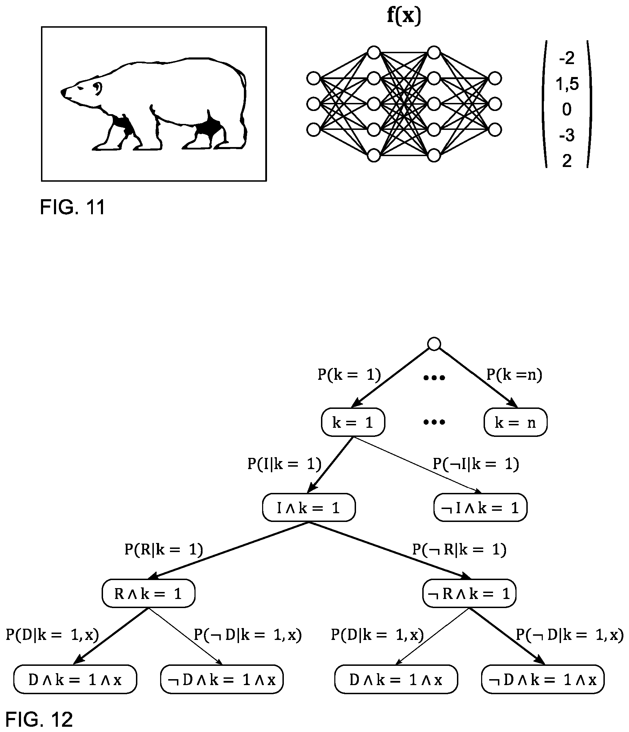

Tiefe neuronale Netze setzen sich zusammen aus einem Merkmalsextraktor $f(x)$ und einer linearen Klassifizierungsschicht mit Gewichtungen $\mathbf{w}_c$ für jede Klasse $c$. Die Gewichtungen für die Klassen "Eisbär" und "Zebra", die den oben genannten Klassen-Zerlegungsplänen entsprechen, sind in Fig. 10 dargestellt. Aus einem Eingangsbild ermittelt der Merkmalsextraktor $f(x)$ nun Merkmalswerte, sogenannte "Feature Scores". Dies entspricht dem Extrahieren eines Zerlegungsplans und ist in Fig. 11 dargestellt. Aus den Merkmalswerten werden nun mittels der Berechnung von $\mathbf{f}^T(\mathbf{x}) \cdot \mathbf{w}_c$ die Logits für alle Klassen $c$ bestimmt, d.h. die noch nicht normalisierten Vorhersagen des Modells. Für die Merkmalswerte aus Fig. 11 und die Gewichtungen $\mathbf{w}_c$ aus Fig. 10 ergibt dies für die Klasse "1" den Wert "17,5" und für die Klasse "2" den Wert "-12". Die Anwendung einer Softmax-Funktion auf diese Werte ergibt eine Wahrscheinlichkeit "1" für die Klasse "1" und eine Wahrscheinlichkeit "0" für die Klasse "2". Dies entspricht in gewisser, abgeschwächter Art und Weise dem oben beschriebenen Schlussfolgern: Damit ein Merkmal zur Entscheidung für eine bestimmte Klasse beiträgt, d.h. einen hohen Logit bewirkt, müssen der Merkmalswert und die zugehörige Gewichtung das gleiche Vorzeichen haben und beide von Null verschieden sein. Akzeptiert man eine Interpretation der Werte als eine Art von Korrelation, so hat das Vorzeichen einen Bezug zum positiven oder negativen Schlussfolgern. Ist einer der Werte Null, trägt das Merkmal nicht bei, was dem indefiniten Schlussfolgern entspricht. Allerdings wird in neuronalen Netzen üblicherweise ein Rectifier auf die Merkmalswerte, auch als ReLU-Aktivierung bezeichnet, angewendet. Dies führt dazu, dass nur noch der Positivteil der Merkmalswerte vorliegt. Negatives Schlussfolgern kann damit nicht mehr modelliert werden. Ein weiteres Problem neuronaler Netze besteht darin, dass die Merkmalswerte und die Gewichtungen keinen Bezug zu Wahrscheinlichkeiten haben und damit schwierig zu interpretieren sind. Zudem sind die Repräsentationen der Merkmale nicht bekannt. Schließlich werden die letztlich vom neuronalen Netz ausgegebenen Wahrscheinlichkeiten künstlich durch die Softmax-Aktivierung hervorgebracht. Die Interpretierbarkeit der Klassifizierungsentscheidung ist daher im Allgemeinen schwach.

Ziel ist es daher, ein differenzierbares Modell für die Klassifizierung zu definieren, das die folgenden Eigenschaften hat:

1. Die Entscheidung wird auf Grundlage eines Satzes von Komponenten im Eingangsraum modelliert.
2. Die Merkmalswerte werden zu Detektionswahrscheinlichkeiten, wobei "0" zugeordnet wird, wenn eine Komponente nicht detektiert wurde, und "1" zugeordnet wird, wenn eine Komponente detektiert wurde.
3. Positives, negatives und indefinites Schlussfolgern ist für jede Komponente und Klasse erlernbar.
4. Die Logits werden zu Wahrscheinlichkeiten der Klassenhypothese.

Das 1. Ziel wird erreicht, indem zunächst ein Satz $K = \{\kappa_1, ..., \kappa_n\}$ von Komponenten im Eingangsraum definiert wird. Diese Komponenten werden mittels einer siamesischen Netzwerkarchitektur parallel zur Eingangsgröße verarbeitet.

Für das 2. Ziel wird ein Detektionswahrscheinlichkeitsvektor d(x) definiert:

$$\mathbf{d}(\mathbf{x}) = \Big( d(f(\mathbf{x}), f(\kappa_1)), ..., d(f(\mathbf{x}), f(\kappa_n)) \Big)^T,$$

$$\text{sodass } f(\mathbf{x}) = f(\kappa_k) \Rightarrow d(f(\mathbf{x}), f(\kappa_k)) = 1.$$

Für das 3. und 4. Ziel ist etwas mehr Aufwand erforderlich. Betrachtet wird dazu zunächst der in Fig. 12 dargestellte Entscheidungsbaum für das Schlussfolgern für eine Klasse c. Die Variable k = 1,2,3, ..., n ist dabei ein Indikator für die betrachtete Komponente. I bezeichnet die Bedeutung einer Komponente für die Klassenentscheidung. R steht für das Schlussfolgern durch die Detektion einer Komponente für die Klassenentscheidung. D steht für die Detektion einer Komponente in einer Eingangsgröße. Die mit dicken Pfeilen eingezeichneten Pfade sind die Pfade mit Übereinstimmung (A).

Aus dem Entscheidungsbaum lassen sich die folgenden Wahrscheinlichkeiten ableiten:

$$P(I|k) \cdot P(R|k) = P(I \wedge R|k)$$

ist die Wahrscheinlichkeit, dass die Komponente k von Bedeutung ist und detektiert werden muss.

$$P(I|k) \cdot P(\neg R|k) = P(I \wedge \neg R|k)$$

ist die Wahrscheinlichkeit, dass die Komponente k von Bedeutung ist und nicht detektiert werden darf.

$P(\neg I|k)$ ist die Wahrscheinlichkeit, dass die Komponente k nicht von Bedeutung ist.

Angenommen sei, dass die Prior-Wahrscheinlichkeit P(k) gleich 1/n ist. Die Schlussfolgerungsmatrix R für eine Klasse ist nun definiert als:

$$\mathbf{R} = \begin{pmatrix} P(I \wedge R|k = 1) & ... & P(I \wedge R|k = n) \\ P(\neg I|k = 1) & ... & P(\neg I|k = n) \\ P(I \wedge \neg R|k = 1) & ... & P(I \wedge \neg R|k = n) \end{pmatrix} = \begin{pmatrix} \mathbf{p}^+ \\ \mathbf{p}^0 \\ \mathbf{p}^- \end{pmatrix}.$$

Die Wahrscheinlichkeit, dass die Komponenten die Klassenhypothese c für eine gegebene Eingangsgröße x stützen, wird durch die Übereinstimmung unter der Bedingung der Bedeutung modelliert:

$$P_c(A|I, \mathbf{x}) = \frac{\mathbf{p}_c^+ \cdot \mathbf{d(x)} + \mathbf{p}_c^- \cdot (1 - \mathbf{d(x)})}{\mathbf{p}_c^+ \cdot 1 + \mathbf{p}_c^- \cdot 1}.$$

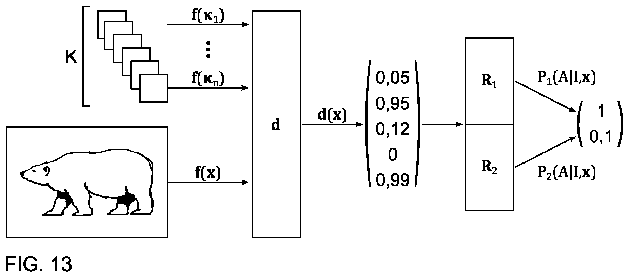

Werden die Wahrscheinlichkeiten $P_c(A|I, x)$ für alle Klassen c in einem Vektor zusammengefasst, erhält man den Wahrscheinlichkeitsvektor p(x) für die Klassenhypothesen. Damit die Logits zu Wahrscheinlichkeiten der Klassenhypothese werden und mittels eines Schlussfolgerungsprozesses modelliert werden, wird somit für jede Klasse die Größe $P_c(A|I, x)$ für die gegebene Schlussfolgerungsmatrix $\mathbf{R_c}$ berechnet. Der gesamte Ablauf ist beispielshaft in Fig. 13 dargestellt.

**Referenzen**

[1] O. Li et al.: "Deep Learning for Case-Based Reasoning through Prototypes: A Neural Network that Explains Its Predictions" (http://arxiv.org/abs/1710.04806)

[2] S. Saralajew et al.: "Prototype-based Neural Network Layers: Incorporating Vector Quantization" (http://arxiv.org/abs/1812.01214)

[3] J. Snell et al.: "Prototypical Networks for Few-shot Learning" (https://arxiv.org/abs/1703.05175)

[4] P. Tokmakov et al.: "Learning Compositional Representations for Few-Shot Recognition" (https://arxiv.org/abs/1812.09213)

[5] S.C. Hsu et al.: "Human Object Identification for Human-Robot Interaction by using Fast R-CNN", 2018 Second IEEE International Conference on Robotic Computing, S. 201-204

[6] I. Biederman: "Recognition-by-components: a theory of human image understanding", Psychological Review, Vol. 94 (1987), S. 115-147

**Bezugszeichenliste**

| | |
|---|---|
| 10 | Bereitstellen von Komponenten |
| 11 | Trainieren des neuronalen Netzes mit den bereitgestellten Komponenten |
| 12 | Bestimmen von Merkmalsverteilungen für die Komponenten oder Lernen von Parametern für das Erzeugen von Merkmalsverteilungen |
| 13 | Lernen von Parametern für Schlussfolgerungen |
| 20 | Vorrichtung |
| 21 | Eingang |
| 22 | Auswahlmodul |
| 23 | Trainingsmodul |
| 24 | Analysemodul |
| 25 | Kontrolleinheit |
| 26 | Speicher |
| 27 | Ausgang |
| 28 | Benutzerschnittstelle |
| 30 | Vorrichtung |
| 31 | Speicher |
| 32 | Prozessor |
| 33 | Eingang |
| 34 | Ausgang |
| 40 | Empfangen einer zu verarbeitenden Eingangsgröße |
| 41 | Ableiten einer Merkmalsverteilung aus der Eingangsgröße |
| 42 | Ermitteln von Detektionswahrscheinlichkeiten der Merkmalsverteilung in Bezug auf Merkmalsverteilungen von Komponenten |

| 43 | Schlussfolgern einer Ausgabe für die Eingangsgröße |
|---|---|
| 50 | Steuergerät |
| 51 | Eingang |
| 52 | Merkmalsverteilungsgenerator |
| 53 | Schlussfolgerungsmodul |
| 54 | Kontrolleinheit |
| 55 | Speicher |
| 56 | Ausgang |
| 57 | Benutzerschnittstelle |
| 60 | Vorrichtung |
| 61 | Speicher |
| 62 | Prozessor |
| 63 | Eingang |
| 64 | Ausgang |
| 70 | Kraftfahrzeug |
| 71 | Steuerungssystem |
| 72 | Umfeldsensorik |
| 73 | Datenübertragungseinheit |
| 74 | Speicher |
| 75 | Netzwerk |
| CNN | Neuronales Netz |
| IN | Eingangsgröße |
| K | Komponente |
| KZP | Klassen-Zerlegungsplan |
| O | Objekt |
| OUT | Ausgabe |
| ZP | Zerlegungsplan |

**Patentansprüche**

1. Verfahren zum Verarbeiten von Eingangsgrößen (IN) im Rahmen einer Wahrnehmungsaufgabe oder einer Planungsaufgabe in einem Fortbewegungsmittel (70), mit den Schritten:

 - Empfangen (40) einer zu verarbeitenden Eingangsgröße (IN);
 - Ableiten (41) einer Merkmalsverteilung aus der Eingangsgröße (IN) durch ein neuronales Netz (CNN), wobei das neuronale Netz (CNN) mit Komponenten (K), die in Bezug auf eine Anwendung des neuronalen Netzes (CNN) typische Eingangsgrößen repräsentieren, und Merkmalsverteilungen der Komponenten (K) als Basis für Klassenentscheidungen trainiert ist, wobei die Komponenten (K) in Form von Primitiven gegeben sind, die elementare Bestandteile repräsentieren, aus denen sich die typischen Eingangsgrößen ergeben, und wobei die Merkmalsverteilungen angeben, welche Komponenten (K) für eine Klassenhypothese detektiert werden müssen, welche Komponenten (K) für die Klassenhypothese nicht detektiert werden dürfen und welche Komponenten (K) nicht zur Klassenhypothese beitragen;
 - Ermitteln (42) von Detektionswahrscheinlichkeiten der Merkmalsverteilung in Bezug auf die Merkmalsverteilungen der beim Trainieren des neuronalen Netzes (CNN) verwendeten Komponenten (K);
 - Schlussfolgern (43) einer Ausgabe (OUT) für die Eingangsgröße (IN) auf Basis der ermittelten Detektionswahrscheinlichkeiten, wobei beim Schlussfolgern (43) der Ausgabe (OUT) positives, negatives und indefinites Schlussfolgern genutzt wird; und
 - Verwenden der Ausgabe (OUT) durch ein Steuerungssystem (71) des Fortbewegungsmittels (70) als Grundlage für Entscheidungen des Steuerungssystems (71), wobei die Entscheidungen des Steuerungssystems (71) die Wahrnehmungsaufgabe oder die Planungsaufgabe in dem Fortbewegungsmittel betreffen.

2. Verfahren gemäß Anspruch 1, wobei beim Schlussfolgern (43) zumindest eine Schlussfolgerungsmatrix ($R_i$) genutzt wird.

3. Verfahren gemäß Anspruch 1 oder 2, wobei die Merkmalsverteilungen der beim Trainieren des neuronalen Netzes (CNN) verwendeten Komponenten (K) vorberechnet bereitgehalten werden.

4. Verfahren gemäß einem der vorherigen Ansprüche, wobei die zu verarbeitenden Eingangsgrößen (IN) Betriebsparameter eines Kraftfahrzeugs (70) oder Umgebungsdaten von einer im Kraftfahrzeug (70) verbauten Umfeldsensorik (72) sind.

5. Computerprogramm mit Instruktionen, die bei Ausführung durch einen Computer den Computer zur Ausführung der Schritte eines Verfahrens gemäß einem der Ansprüche 1 bis 4 zum Verarbeiten von Eingangsgrößen (IN) im Rahmen einer Wahrnehmungsaufgabe oder einer Planungsaufgabe in einem Fortbewegungsmittel (70) veranlassen.

6. Steuergerät (50) zum Verarbeiten von Eingangsgrößen im Rahmen einer Wahrnehmungsaufgabe oder einer Planungsaufgabe in einem Fortbewegungsmittel (70), mit:

   - einem Eingang (51) zum Empfangen (40) einer zu verarbeitenden Eingangsgröße (IN);
   - einem neuronalen Netz (CNN), das mit Komponenten (K), die in Bezug auf eine Anwendung des neuronalen Netzes (CNN) typische Eingangsgrößen repräsentieren, und Merkmalsverteilungen der Komponenten (K) als Basis für Klassenentscheidungen trainiert ist, wobei die Komponenten (K) in Form von Primitiven gegeben sind, die elementare Bestandteile repräsentieren, aus denen sich die typischen Eingangsgrößen ergeben, und wobei die Merkmalsverteilungen angeben, welche Komponenten (K) für eine Klassenhypothese detektiert werden müssen, welche Komponenten (K) für die Klassenhypothese nicht detektiert werden dürfen und welche Komponenten (K) nicht zur Klassenhypothese beitragen, wobei das neuronale Netz (CNN) eingerichtet ist, eine Merkmalsverteilung aus der Eingangsgröße (IN) abzuleiten (41) und Detektionswahrscheinlichkeiten der Merkmalsverteilung in Bezug auf die Merkmalsverteilungen der beim Trainieren des neuronalen Netzes (CNN) verwendeten Komponenten (K) zu ermitteln (42);
   - einem Schlussfolgerungsmodul (53) zum Schlussfolgern (43) einer Ausgabe (OUT) für die Eingangsgröße (IN) auf Basis der ermittelten Detektionswahrscheinlichkeiten, wobei das Schlussfolgerungsmodul (53) eingerichtet ist, beim Schlussfolgern (43) der Ausgabe (OUT) positives, negatives und indefinites Schlussfolgern zu nutzen; und
   - einem Ausgang (56) zum Ausgeben der Ausgabe (OUT) an ein Steuerungssystem (71) des Fortbewegungsmittels (70) als Grundlage für Entscheidungen des Steuerungssystems (71), wobei die Entscheidungen des Steuerungssystems (71) die Wahrnehmungsaufgabe oder die Planungsaufgabe in dem Fortbewegungsmittel betreffen.

7. Fortbewegungsmittel (70) mit einem Steuerungssystem (71), **dadurch gekennzeichnet, dass** das Fortbewegungsmittel (70) ein Steuergerät (50) gemäß Anspruch 6 aufweist oder eingerichtet ist, ein Verfahren gemäß einem der Ansprüche 1 bis 4 zum Verarbeiten von Eingangsgrößen (IN) auszuführen.

## Claims

1. Method for processing input variables (IN) in the context of a perception task or a planning task in a means of transport (70), comprising the steps of:

   - receiving (40) an input variable (IN) to be processed;
   - deriving (41) a feature distribution from the input variable (IN) by a neural network (CNN), wherein the neural network (CNN) is trained with components (K) that represent typical input variables with respect to an application of the neural network (CNN), and feature distributions of the components (K) as a basis for class decisions, wherein the components (K) are given in the form of primitives that represent elementary components from which the typical input variables are formed, and wherein the feature distributions indicate which components (K) must be detected for a class hypothesis, which components (K) must not be detected for the class hypothesis, and which components (K) do not contribute to the class hypothesis;
   - determining (42) detection probabilities of the feature distribution with respect to the feature distributions of the components (K) used in training the neural network (CNN);
   - inferring (43) an output (OUT) for the input variable (IN) on the basis of the determined detection probabilities, wherein positive, negative and indefinite inference is used when inferring (43) the output (OUT); and
   - using the output (OUT) by a control system (71) of the means of transport (70) as a basis for decisions of the control system (71), wherein the decisions of the control system (71) relate to the perception task or the planning task in the means of transport.

2. Method according to claim 1, wherein when inferring (43) at least one inference matrix ($R_i$) is used.

3. Method according to claim 1 or 2, wherein the feature distributions of the components (K) used in training the neural network (CNN) are kept ready in precalculated form.

4. Method according to any of the preceding claims, wherein the input variables (IN) to be processed are operating parameters of a motor vehicle (70) or environmental data from an environmental sensor system (72) installed in the motor vehicle (70).

5. Computer-readable storage medium having instructions that, when executed by a computer, cause the computer to perform the steps of a method according to any of claims 1 to 4 for processing input variables (IN) in the context of a perception task or a planning task in a means of transport (70).

6. Control device (50) for processing input variables in the context of a perception task or a planning task in a means of transport (70), comprising:

   - an input (51) for receiving (40) an input variable (IN) to be processed;
   - a neural network (CNN) trained with components (K) that represent typical input variables with respect to an application of the neural network (CNN), and feature distributions of the components (K) as a basis for class decisions, wherein the components (K) are given in the form of primitives that represent elementary components from which the typical input variables are formed, and wherein the feature distributions indicate which components (K) must be detected for a class hypothesis, which components (K) must not be detected for the class hypothesis, and which components (K) do not contribute to the class hypothesis, wherein the neural network (CNN) is configured to derive a feature distribution from the input variable (IN) (41) and to determine detection probabilities of the feature distribution with respect to the feature distributions of the components (K) used in training the neural network (CNN) (42);
   - an inference module (53) for inferring (43) an output (OUT) for the input variable (IN) on the basis of the determined detection probabilities, wherein the inference module (53) is configured to use positive, negative, and indefinite inference when inferring (43) the output (OUT); and
   - an outlet (56) for outputting the output (OUT) to a control system (71) of the means of transport (70) as a basis for decisions of the control system (71), wherein the decisions of the control system (71) relate to the perception task or the planning task in the means of transport.

7. Means of transport (70) having a control system (71),
   **characterized in that** the means of transport (70) has a control device (50) according to claim 6 or is configured to carry out a method according to any of claims 1 to 4 for processing input variables (IN).

**Revendications**

1. Procédé de traitement de grandeurs d'entrée (IN) dans le cadre d'une tâche de perception ou d'une tâche de planification dans un moyen de locomotion (70), comportant les étapes suivantes :

   - réception (40) d'une grandeur d'entrée (IN) à traiter ;
   - déduction (41) d'une distribution de caractéristiques à partir de la grandeur d'entrée (IN) par un réseau neuronal (CNN), dans lequel le réseau neuronal (CNN) est entraîné avec des composants (K) qui représentent des grandeurs d'entrée typiques par rapport à une application du réseau neuronal (CNN), et des distributions de caractéristiques des composants (K) comme base pour des décisions de classe, dans lequel les composants (K) sont donnés sous forme de primitives, qui représentent des constituants élémentaires dont résultent les grandeurs d'entrée typiques, et dans lequel les distributions de caractéristiques indiquent quels composants (K) doivent être détectés pour une hypothèse de classe, quels composants (K) ne doivent pas être détectés pour l'hypothèse de classe et quels composants (K) ne contribuent pas à l'hypothèse de classe ;
   - détermination (42) de probabilités de détection de la distribution de caractéristiques par rapport aux distributions de caractéristiques des composants (K) utilisés lors de l'entraînement du réseau neuronal (CNN) ;
   - inférence (43) d'une sortie (OUT) pour la grandeur d'entrée (IN) sur la base des probabilités de détection déterminées, dans lequel lors de l'inférence (43) de la sortie (OUT) une inférence positive, négative et indéfinie est utilisée ; et
   - utilisation de la sortie (OUT) par un système de commande (71) du moyen de locomotion (70) comme fondement de décisions du système de commande (71), dans lequel les décisions du système de commande (71) concernent la tâche de perception ou la tâche de planification dans le moyen de locomotion.

**2.** Procédé selon la revendication 1, dans lequel au moins une matrice d'inférence ($R_i$) est utilisée lors de l'inférence (43).

**3.** Procédé selon la revendication 1 ou 2, dans lequel les distributions de caractéristiques des composants (K) utilisés lors de l'entraînement du réseau neuronal (CNN) sont tenues à disposition de manière précalculée.

**4.** Procédé selon l'une des revendications précédentes, dans lequel les grandeurs d'entrée (IN) à traiter sont des paramètres de fonctionnement d'un véhicule automobile (70) ou des données d'environnement provenant d'un ensemble de capteurs d'environnement (72) monté dans le véhicule automobile (70).

**5.** Programme informatique comportant des instructions qui, lorsqu'elles sont exécutées par un ordinateur, amènent l'ordinateur à exécuter les étapes d'un procédé selon l'une des revendications 1 à 4 pour le traitement de grandeurs d'entrée (IN) dans le cadre d'une tâche de perception ou d'une tâche de planification dans un moyen de locomotion (70).

**6.** Appareil de commande (50) pour le traitement de grandeurs d'entrée dans le cadre d'une tâche de perception ou d'une tâche de planification dans un moyen de locomotion (70), comportant :

- une entrée (51) pour recevoir (40) une grandeur d'entrée (IN) à traiter ;
- un réseau neuronal (CNN) entraîné avec des composants (K) qui représentent des grandeurs d'entrée typiques par rapport à une application du réseau neuronal (CNN) et des distributions de caractéristiques des composants (K) comme base pour des décisions de classe, dans lequel les composants (K) sont donnés sous forme de primitives qui représentent des constituants élémentaires dont résultent les grandeurs d'entrée typiques, et dans lequel les distributions de caractéristiques indiquent, quels composants (K) doivent être détectés pour une hypothèse de classe, quels composants (K) ne doivent pas être détectés pour l'hypothèse de classe et quels composants (K) ne contribuent pas à l'hypothèse de classe, dans lequel le réseau neuronal (CNN) est conçu pour dériver (41) une distribution de caractéristiques à partir de la grandeur d'entrée (IN) et pour déterminer (42) des probabilités de détection de la distribution de caractéristiques par rapport aux distributions de caractéristiques des composants (K) utilisés lors de l'entraînement du réseau neuronal (CNN) ;
- un module d'inférence (53) pour inférer (43) une sortie (OUT) pour la grandeur d'entrée (IN) sur la base des probabilités de détection déterminées, dans lequel le module d'inférence (53) est conçu pour utiliser une inférence positive, négative et indéfinie lors de l'inférence (43) de la sortie (OUT) ; et
- une sortie (56) pour délivrer la sortie (OUT) à un système de commande (71) du moyen de locomotion (70) comme fondement pour des décisions du système de commande (71), dans lequel les décisions du système de commande (71) concernent la tâche de perception ou la tâche de planification dans le moyen de locomotion.

**7.** Moyen de locomotion (70) comportant un système de commande (71), **caractérisé en ce que** le moyen de locomotion (70) présente un appareil de commande (50) selon la revendication 6 ou est conçu pour exécuter un procédé selon l'une des revendications 1 à 4 pour traiter une grandeur d'entrée (IN).

FIG. 1

FIG. 2

FIG. 3

FIG. 4

FIG. 5

FIG. 6

FIG. 7

FIG. 8

Eisbär
K
schwarz: nein
weiß: ja
braun: nein
Streifen: nein
Wasser: ja

Zebra
K
schwarz: ja
weiß: ja
braun: nein
Streifen: ja
Wasser: nein

FIG. 9

$$\mathbf{w_1} = \begin{pmatrix} -1{,}5 \\ 3 \\ 0{,}5 \\ -2 \\ 2 \end{pmatrix} \begin{matrix} \underline{\text{Eisbär}} \\ \text{schwarz} \\ \text{weiß} \\ \text{braun} \\ \text{Streifen} \\ \text{Wasser} \end{matrix} \qquad \mathbf{w_2} = \begin{pmatrix} 1 \\ 2 \\ 0 \\ 3 \\ -2 \end{pmatrix} \begin{matrix} \underline{\text{Zebra}} \\ \text{schwarz} \\ \text{weiß} \\ \text{braun} \\ \text{Streifen} \\ \text{Wasser} \end{matrix}$$

FIG. 10

**f(x)**

$$\begin{vmatrix} -2 \\ 1{,}5 \\ 0 \\ -3 \\ 2 \end{vmatrix}$$

FIG. 11

P(k = 1)  •••  P(k =n)

k = 1  •••  k = n

P(I|k = 1)    P(¬I|k = 1)

I ∧ k = 1    ¬I ∧ k = 1

P(R|k = 1)    P(¬R|k = 1)

R ∧ k = 1    ¬R ∧ k = 1

P(D|k = 1,x)    P(¬D|k = 1,x)    P(D|k = 1,x)    P(¬D|k = 1,x)

D ∧ k = 1 ∧ x    ¬D ∧ k = 1 ∧ x    D ∧ k = 1 ∧ x    ¬D ∧ k = 1 ∧ x

FIG. 12

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019105850 A1

- US 20160055409 A1

**In der Beschreibung aufgeführte Nicht-Patentliteratur**

- **O. LI et al.** *Deep Learning for Case-Based Reasoning through Prototypes: A Neural Network that Explains Its Predictions*
- **S. SARALAJEW et al.** *Prototype-based Neural Network Layers: Incorporating Vector Quantization*
- **J. SNELL et al.** *Prototypical Networks for Few-shot Learning*
- **P. TOKMAKOV et al.** *Learning Compositional Representations for Few-Shot Recognition*
- **S.C. HSU et al.** *Human Object Identification for Human-Robot Interaction by using Fast R-CNN*
- **O. LI et al.** *Deep Learning for Case-Based Reasoning through Prototypes: A Neural Network that Explains Its Predictions*, http://arxiv.org/abs/1710.04806

- **S. SARALAJEW et al.** *Prototype-based Neural Network Layers: Incorporating Vector Quantization*, http://arxiv.org/abs/1812.01214
- **J. SNELL et al.** *Prototypical Networks for Few-shot Learning*, https://arxiv.org/abs/1703.05175
- **P. TOKMAKOV et al.** *Learning Compositional Representations for Few-Shot Recognition*, https://arxiv.org/abs/1812.09213
- **S.C. HSU et al.** Human Object Identification for Human-Robot Interaction by using Fast R-CNN. *2018 Second IEEE International Conference on Robotic Computing*, 201-204
- **I. BIEDERMAN**. Recognition-by-components: a theory of human image understanding. *Psychological Review*, 1987, vol. 94, 115-147